# EUROPEAN PATENT APPLICATION

(11) **EP 1 593 453 A1**
(43) Date of publication of application: **09.11.2005**
(21) Application number: 05250076.6
(22) Date of filing: 10.01.2005
(51) Int. Cl.: B23P 15/40, B21D 53/64, A01D 34/62, A01D 34/42

(54) **Bed knife and method of forming**

(30) Priority: 04.05.2004 US 838862
(71) Applicant: TEXTRON INC., Providence, Rhode Island 02903 (US)
(72) Inventor: Mahan, Jonathan Dohme F., Charlotte North Carolina 28273 (US); Berkeley, James, Pineville North Carolina 28134 (US)
(74) Representative: Moir, Michael Christopher

(57) **Abstract**

A method of manufacturing a bed knife (200) for a reel mower. The method includes cold roll forming spring steel, flattening and straightening the spring steel, shaping the spring steel through a plurality of rollers to impart a bending force upon the spring steel to define a mounting portion (202) and an upturned portion (204), and grinding a portion of the upturned portion (204) to form a cutting edge (218).

## Description

### FIELD OF THE INVENTION

This invention generally relates to bed knives for reel mowers and, more particularly, relates to an improved bed knife and method of forming the same capable of simplifying manufacture and reducing overall manufacturing costs.

### BACKGROUND OF THE INVENTION

Reel mowers use a scissoring action to shear grass and like foliage. Such reel mowers are more expensive and require more maintenance than rotary mowers, however they are preferred by golf courses and the like where appearance and healthy grass are important. Individual reel mower assemblies are quite narrow and consequently reel mower units commonly comprise a plurality of side-by-side reel mower assemblies.

Examples of such mowers are disclosed in U.S. Pat. Nos. 5,291,724, 5,477,666 and 6,318,059. In a typical reel mower assembly, an attachment member, commonly called a bed bar, is attached to the apparatus in rigid relationship to the reel and a replaceable bed knife is attached to the bed bar. The reel, bed bar, and bed knife are oriented such that the bed knife is held parallel to the reel axis and in close proximity to the reel knives so that a shearing action is achieved between the reel knives and the bed knife. Typically, an adjustment mechanism is provided to allow movement of the bed bar relative to the reel so that the bed knife can be moved into proper relationship with the rotating reel knives.

Conventionally, the bed knife is attached to the bed bar with a plurality of screws placed through holes in the bed knife and engaging threaded holes in the bed bar. Typically, ten or more screws are used to insure that the bed knife remains flat relative to the bed bar and the reel knives. Additionally, these conventional bed knifes are also formed from relatively thick steel stock to permit the fasteners to be countersunk therein. Such arrangement permits the fasteners to be generally flush with the bed knife to prevent or, at least, minimize any contact between the fastener head and the turf. The thickness of the bed knife minimizes deformation caused by tightening the fasteners.

Changing the bed knife requires that these fasteners be removed and then replaced. Typically, the bed knife is attached to the underside of the bed bar so that the apparatus must be raised sufficiently, or partially disassembled, to allow access to the underside of the reel mower assembly to remove the screws and the bed knife. A reel-mower unit, such as is used by a golf course or the like, may comprise eight or ten individual reel mower assemblies, and changing bed knives on such a mower unit requires significant labor time and corresponding downtime.

Similarly, the fasteners that fix the bed knife to the bed bar such that when a stone or similar debris enters the mower, it can jam between the fixed bed knife and the reel, causing damage to one or more portions of the apparatus. Similarly should the bed knife contact a substantially buried obstruction, the bed knife can be damaged as it bounces over the obstruction. While the bed knife can simply be replaced, damage to the reel is generally much more costly and problematic, given the close tolerances required for proper operation.

### SUMMARY OF THE INVENTION

It is the object of the present invention to provide an improved reel mower assembly, and an improved bed knife that can be attached to existing reel mower assemblies, that allows for quick changing of the bed knife with significantly reduced labor and is downtime compared to the prior art.

In a first aspect the invention provides a reel mower assembly comprising a mower reel rotatably mounted to a frame, and a drive operative to rotate the reel about a reel axis. At least one magnet is mounted on the frame and a bed knife is magnetically held against the magnet in an operating position such that the bed knife is oriented in cutting relationship with the reel. Engagement means are operative to prevent sliding movement of the bed knife with respect to the magnet while allowing the bed knife to move away from the magnet when a separating force is exerted on the bed knife in a direction away from the magnet that is greater than an attractive force exerted on the bed knife by the magnet when the bed knife is in the operating position.

In a second aspect the invention provides an apparatus adapted for attachment to a reel mower assembly comprising a mower reel rotatably mounted to a frame and a drive operative to rotate the reel about a reel axis. The apparatus comprises a bed bar adapted for attachment to the frame substantially parallel to the reel axis and a plurality of magnets mounted on the bed bar. A bed knife is magnetically held against the magnets in an operating position such that the bed knife is oriented in cutting relationship with the reel when the bed bar is attached to the frame. Engagement means are operative to prevent sliding movement of the bed knife with respect to the magnets while allowing the bed knife to move away from the magnets when a separating force is exerted on the bed knife in a direction away from the magnets that is greater than an attractive force exerted on the bed knife by the magnets when the bed knife is in the operating position.

The engagement means can comprise protrusions extending from one of the frame and bed knife into corresponding recesses in the other of the frame and bed knife. Alternatively, ridges could be formed on the frame such that the ridges bear against the front edge and side edges of the bed knife. Such ridges would prevent rearward or sideways movement, leaving the front cutting edge open and in cutting relationship to the reel. Little forward directed force will ordinarily be encountered by the bed knife in such a reel mower assembly, and such forward force could be resisted by the magnets. The protrusions and recesses have the advantage of resisting sliding forces forward, rearward or sideways. Both ridges and protrusions allow a separating force to be exerted on the bed knife to overcome the magnetic force holding the bed knife to the magnets in order to remove the bed knife.

In a third aspect the invention provides, in a reel mower assembly comprising a mower reel rotatably mounted to a frame and a drive operative to rotate the reel about a reel axis, a method of holding a bed knife in an operating position such that the bed knife is oriented in cutting relationship with the reel. The method comprises mounting at least one magnet on the frame, magnetically holding the bed knife against the magnet in the operating position, and preventing sliding movement of the bed knife with respect to the magnet while allowing the bed knife to move away from the magnet when a separating force is exerted on the bed knife in a direction away from the magnet that is greater than an attractive force exerted on the bed knife by the magnet when the bed knife is in the operating position.

Commercial grade magnets are available of sufficient strength such that when they are built into the supporting frame for the bed knife, typically on a frame portion called the bed bar, they will hold the bed knife in the operating position resisting considerable separating forces that might be encountered by the bed knife in operation. The engagement means prevents sliding movement of the bed knife with respect to the bed bar in response to the rearward force of the reel pulling grass against the forward edge of the bed knife, or in response to sideways forces during turns. The engagement means aligns the bed knife in the proper operating position When the bed knife and bed bar are clean, the bed knife can be readily maneuvered into engagement with the protrusions, ridges or the like and will then snap into place in response to the force of the magnets.

The magnetic attachment of the bed knife to the frame has numerous advantages over the mechanical or screw attachment of the prior art. The magnetic attachment results in a quick change assembly where the bed knife can basically be changed by prying it away from the magnets and attaching another bed knife to the magnets in its place without the need to disassemble the reel mower assembly from the remainder of the reel' mower unit to access the screws holding the bed knife in place.

The present invention yields a relatively "tool-less" bed knife changing operation. The only tool required to remove a bed knife from the frame would be a blade or the like to pry the items apart. The strength of the magnets and number of magnets used in the frame to hold the bed knife in place could be adjusted or varied depending on the circumstances.

The magnetic attachment also reduces maintenance costs by allowing the bed knife to be pulled away from its magnetic attachment and released from the bed bar when an obstruction such as a rock or the like is encountered. Damage to the reel and bed knife is thereby reduced.

While permanent magnets will likely be most widely suited, electromagnets could also be used to hold the bed knife in place. Where electromagnets are used, it would be even easier to release the blade from the frame, since by deactivation of the electromagnets the blades could easily be removed therefrom.

In addition to manufacturing a completed new reel apparatus in accordance with the present invention, a retrofit bed bar and bed knife could also be designed in accordance with the present invention to be retrofitted onto various existing reel mower units.

Still further it is an object of the present invention to provided a method of manufacturing a bed knife for a reel mower. The method includes cold roll forming spring steel, flattening and straightening the spring steel, shaping the spring steel through a plurality of rollers to impart a bending force upon the spring steel to define a mounting portion and an upturned portion, and grinding a portion of the upturned portion to form a cutting edge.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
FIG. 1 is an exploded perspective view showing a reel mower assembly and typical bed knife mounting assembly of the prior art;
FIG. 2 is a schematic side view showing the reel and bed knife mounting arrangement of the prior art reel mower assembly of FIG. 1;
FIG. 3 is a perspective view of the top of a magnetic bed bar of one embodiment of the present invention;
FIG. 4 is a is a perspective view of the bottom of the bed bar of FIG. 3;
FIG. 5 is a perspective view of a bed knife for attachment to the magnetic bed bar of FIG. 3;
FIG. 6 is a schematic side view of the bed knife of FIG. 5 in the operating position on the magnetic bed bar of FIG. 3.
FIG. 7 is a schematic side view of an alternate bed knife and magnetic bed bar;
FIG. 8 is a side view of the bed bar of FIG. 7 contacting an obstruction and indicating the forces exerted on the bed knife to release it from the bed bar;
FIG. 9 is a plan view of a bed knife according to a first method of manufacture;
FIG. 10 is a cross sectional view of the bed knife of FIG. 9;
FIG. 11 is a plan view of the blank used in forming the bed knife of FIG. 9;
FIG. 12 is a plan view of the bed knife of FIG. 9 following multiple grinding operations;
FIG. 13 is a cross sectional view of the bed knife of FIG. 12;
FIG. 14 is a plan view of the bed knife of FIG. 12 following the final grinding operation;
FIG. 15 is a cross sectional view of the bed knife of FIG. 14;
FIG. 16 is a plan view of a bed knife according to a second method of manufacture; and
FIG. 17 is a cross sectional view of the bed knife of FIG. 16.

### DETAILED DESCRIPTION OF THE PREFERRED EMBODIMENTS

The following description of the preferred embodiments is merely exemplary in nature and is in no way intended to limit the invention, its application, or uses.

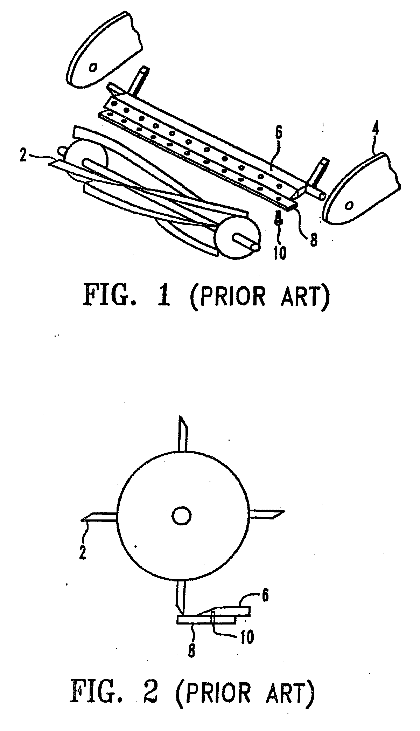

FIG. 1 schematically illustrates the major parts of a prior art reel mower assembly comprising a mower reel 2 rotatably mounted to a frame 4. A drive, not shown, is operative to rotate reel 2 about a reel axis RA. A bed bar 6 forms a portion of frame 4, and bed knife 8 is attached to bed bar 6 by screws 10. Typically, some adjustment mechanism, not shown, is provided to vary the position of bed bar 6 with respect to reel 2 so that the proper cutting relationship between bed knife 8 and reel 2 may be achieved. FIG. 2 illustrates schematically the orientation of reel 2, bed bar 6, and bed knife 8 of the prior art.

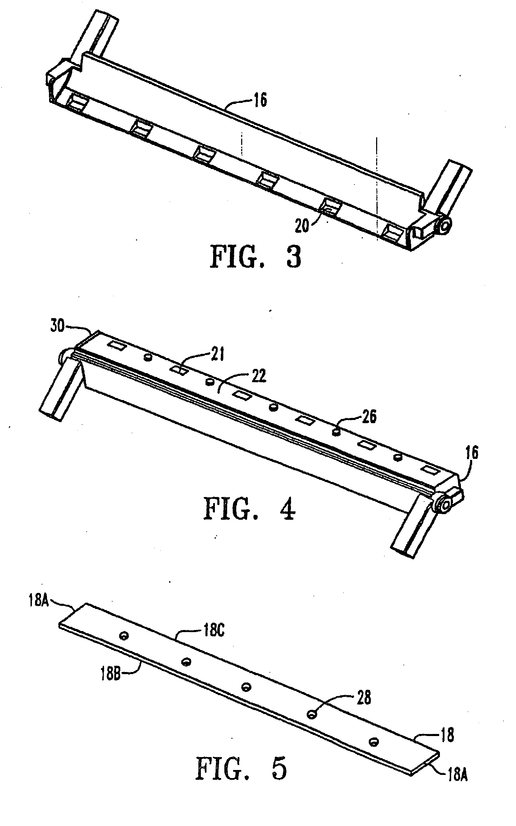

FIGS. 3 and 4 illustrate an embodiment of a magnetic bed bar 16 of the invention. The illustrated bed bar 16 is configured to attach to frame 4 of the prior art reel mower assembly of FIG. 1 in the same manner as the prior art bed bar 6, so that magnetic bed bar 16 can be retro-fit to existing reel mower assemblies. The bed bar frame portion configuration is fairly widespread in various brands of existing reel mower assemblies, allowing for relatively simple modification of the magnetic bed bar such that it may be substituted for the existing bed bars.

As illustrated in FIGS. 3 and 4, a plurality of magnets 20 are mounted in a spaced apart relationship on bed bar 16, and in the illustrated embodiment magnets 20 are embedded in bed bar 16 such that a lower face 21 thereof is substantially flush with bottom surface 22 of magnetic bed bar 16.

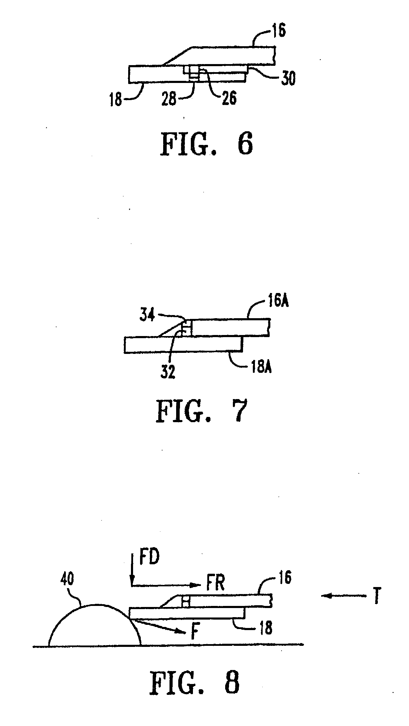

Bed knife 18, illustrated in FIG. 5, is magnetically held against magnets 20 in an operating position as illustrated in FIG. 6 such that bed knife 18 is oriented in cutting relationship with reel 2 in the same fashion as bed knife 8 of the prior art illustrated in FIG. 2.

Engagement means are operative to prevent sliding movement of bed knife 18 with respect to magnets 20. In the illustrated embodiment the engagement means comprises a plurality of protrusions, illustrated as pegs 26, extending from bed bar 16 into a corresponding recess, illustrated as a hole 28, in bed knife 18. Conversely as illustrated in FIG. 7, pegs 32 could extend up from bed knife 18A into corresponding holes 34 in bed knife 16A. Further engagement means are illustrated in FIG. 6 as a ridge 30 bearing against opposite end edges 18A and rear edge 18B of bed knife 18.

While preventing sliding movement, the engagement means, illustrated as pegs 26 in holes 28, and as ridge 30, but also including other means, also allows bed knife 18 to move away from magnets 20 when a separating force is exerted on bed knife 18 in a direction away from magnets 20 that is greater than an attractive force exerted on bed knife 18 by magnets 20 when bed knife 18 is in the operating position. While allowing bed knife 18 to be easily removed by prying it away from bed bar 16, this configuration also allows bed knife 18 to release from bed bar 16 when an obstruction is encountered.

FIG. 8 illustrates schematically contact of bed knife 18 moving in direction T with a typical obstruction ill as a partially buried stone 40. The contact causes a force F to be exerted on bed knife 18. The major component of this force F is exerted rearward, as illustrated by the arrow FR, however there is also a smaller component FD exerted downward such that bed knife 18 is pushed away from bed bar 16 and magnets 20. When this component of force FD exceeds the magnetic attractive force of magnets 20, bed knife 18 will release from bed bar 16. In the prior art bed knife attached by screws, more damage would occur, since the bed knife would have to ride over the obstruction. Similarly where a stone or the like comes between the reel and the bed knife, a like force is exerted which can release the bed knife, reducing the possibility of severe damage to the reel which can be costly to repair.

Ridge 30 alone could provide satisfactory operation with a new bed knife 18, as it essentially forms a low pocket that closely fits edges 18A, 18B of bed knife 18. Sideways and rearward sliding movement with respect to magnets 20 is thus prevented. It is however possible to make bed knife 18 double edged such that the front and rear edges 18C, 181B are both cutting edges, holes 28 and pegs 26 are oriented such that bed knife 18 can be rotated bringing rear cutting edge 18B to the front, thereby doubling the life of bed knife 18. With such a double-edged bed knife 18, the front edge becomes worn and rounded during use such that the ridge bears against a rounded edge that may slide over the ridge when rearward forces arc applied. The pegs and holes are not affected by wear on the bed knife-edges and will maintain the bed knife in position when it is rotated. The use of ridge 30 in combination with pegs 26 and holes 28 helps to align the bed knife with the pegs during installation.

The present invention could be practiced in a number of fashions including by manufacturing new reel cutting assemblies in accordance with the present invention, or alternatively, by producing a retrofit bed bar or support frame kit which would allow the magnetic blade attachment of the present invention to be implemented on an existing mower.

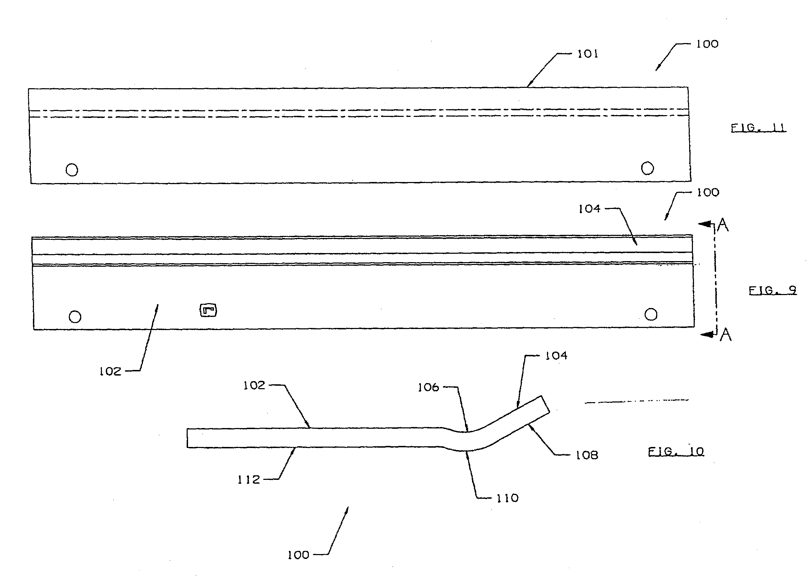

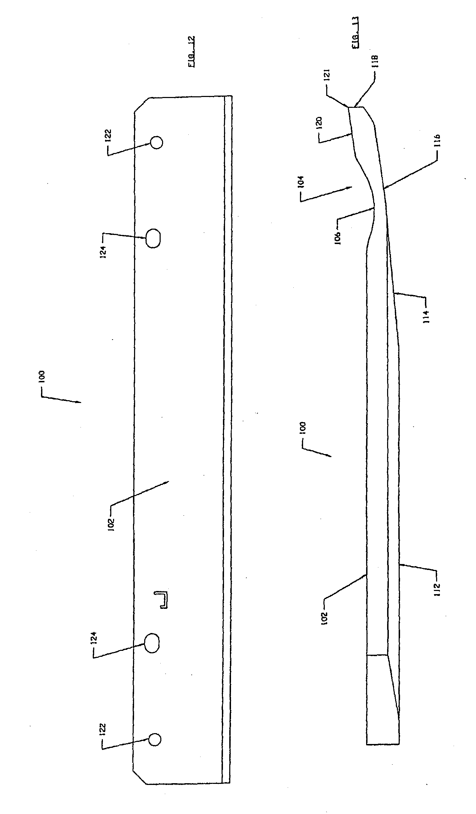

Additionally, magnetic bed knife 18 of the present invention could be manufactured according to various manufacturing processes. More particularly, as seen in FIGS. 9-15, bed knife 18 may be made of carbon steel, specifically AISI 1566 Hot Rolled Pickled and Oiled steel, which is generally referenced at numeral 100. Carbon steel bed knife 100, like bed knife 18, is adapted to be magnetically held against magnets 20 in an operating position on bed bar 16 as illustrated in FIG. 6 such that bed knife 100 is oriented in cutting relationship with reel 2 in the same fashion as bed knife 18.

With particular reference to FIGS. 9-15, the manufacturing steps of carbon steel bed knife 100 will now be discussed in detail. A generally planar blank 101 is first cut to length. Planar blank 101 is then fed through a stamping or pressing machine that first flattens and straightens planar blank 101 and then imparts a bending force upon the blank. Although this shape can vary among reel mowers, the present shape of bed knife 100 includes a generally planar mounting portion 102 and an upturned cutting portion 104. As best seen in FIG. 10, upturned cutting portion 104 initially includes a radius portion 106 interconnecting a distal end 108 with mounting portion 102. Specifically, as a result of the stamping process used to form carbon steel, radius portion 106 includes an outer surface 110 that, as seen in FIG. 10, extends below a lower surface 112 of mounting portion 102. As should be appreciated by one skilled in the art, this condition of outer surface 110 extending below lower surface 112 is undesirable as it may impede proper turf cutting and/or may contact the ground surface. Furthermore, this condition may further limit the reel mower's minimum cutting height. Accordingly, it is preferable to grind off this outer surface 110 to define a generally unobstructed lower surface.

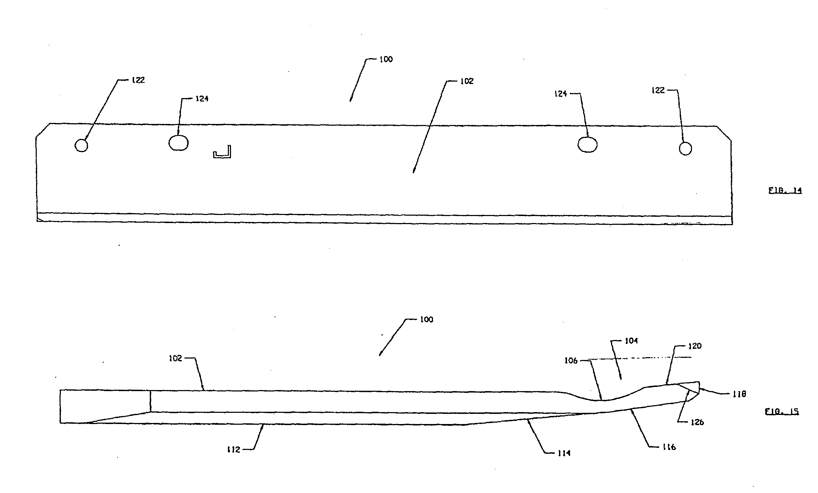

As best seen in FIGS. 12 and 13, bed knife 100 is illustrated following completion of a series of grinding operations sufficient to remove outer surface 110 and define a plurality of faces to create a final desired shape. Specifically, as seen in FIG. 13, bed knife 100 includes a tournament cut face 114 extending upwardly from lower surface 112 of mounting portion 102. Preferably, tournament cut face 114 extends upwardly from lower surface 112 at a relative angle of about 5 degrees. Tournament cut face 114 transitions into a super tournament cut face 116 that extends further upwardly at a greater inclination of about 8 degrees relative to lower surface 112. Bed knife 100 includes a front face 118, which is at about 90 degrees relative to lower surface 112, and a top face 120, which is at about 8 to 10 degrees relative to lower surface 112. Front face 118 and top face 120 intersecting at an edge 121. Tournament cut face 114, super tournament cut face 116, front face 118, and top face 120 are each formed through various grinding operations that requires bed knife 100 to be fed through a milling machine. Following these grinding operations, bed knife 100 is then heat-treated to provide sufficient hardness to reduce the wear of bed knife 100 during operation.

Referring now to FIG. 12, following heat treatment, bed knife 100 further includes a pair of apertures 122 formed through mounting portion 102. This pair of apertures 122 is used during manufacturing to position bed knife 100 during subsequent grinding operations. Additionally, a second pair of apertures 124 is formed through mounting portion 102. This second pair of apertures 124 is sized, similar to holes 28, to receive pegs 26 of bed bar 16.

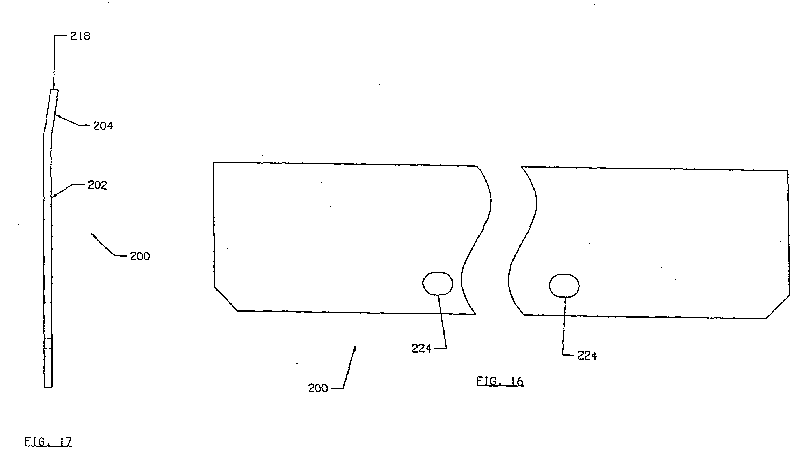

Finally, as seen in FIGS. 14 and 15, a final grind of bed knife 100 is completed. Specifically, through a subsequent grinding operation, following heat treatment, top face 120 is finish ground down such that it is about 5.5 degrees inclined relative to lower surface 112. Similarly, front face 118 is ground down to create a cutting edge 126 in place of edge 121. The particular inclination of cutting edge 126 is dependent upon the desired cutting configuration relative to reel 2.

Although bed knife 100 provides a number of beneficial cutting properties and prolonged wear, the manufacturing thereof may lead to undesirably high costs and complexity. Therefore, a second embodiment of the present invention provides a preferred method of manufacturing the bed knife which is capable of eliminating many of the grinding steps, heat treatment, and complexity of construction.

With particular reference to FIGS. 16 and 17, a bed knife 200 is illustrated being manufactured from a simplified process. More particularly, bed knife 200 is made of spring steel, specifically C1095 Scaleless Blue-Tempered Spring Steel, ASTM A682, which is hardened to a minimum Rockwell number of about 47C. Spring steel bed knife 200, like bed knifes 18 and 100, is adapted to be magnetically held against magnets 20 in an operating position on bed bar 16 as illustrated in FIG. 6 such that bed knife 200 is oriented in cutting relationship with reel 2 in the same fashion as bed knife 18.

Still referring to FIGS. 16 and 17, the manufacturing steps of spring steel bed knife 200 will now be discussed in detail. As will be appreciated, the manufacturing steps of spring steel bed knife 200 are dramatically simplified relative to bed knife 100, thereby leading to reduced manufacturing complexity and cost. A generally planar blank (not shown) is fed into a cold roll-forming machine that imparts a bending force upon the blank. Preferably, the planar blank is a roll of spring steel that can quickly and easily be shaped in a continuous, uninterrupted process. As best seen in FIGS. 16 and 17, the blank is shaped through a series of rollers into a desired shape. Due to the nature of spring steel, this shaping process may require one or more bending and over bending operations to produce the desired final shape.

Although the final shape can vary among reel mower designs, the present shape of bed knife 200 includes a generally planar mounting portion 202 and an upturned cutting portion 204. As best seen in FIG. 17, upturned cutting portion 204 extends upwardly from mounting portion 202 at a relative angle of about 9 degrees. As can be appreciated from the figures, unlike bed knife 100 that includes downwardly protruding outer surface 110 of radius portion 106 caused during the stamping process, the cold roll forming process of the present embodiment does not create such effect, thereby eliminating the need to grind tournament cut face 114 and super tournament cut face 116. Therefore, the use of spring steel permits the use of roll forming rather than stamping, which eliminates a number of grinding operations, but for a final grind of front face 218 to define a cutting surface.

As seen in FIG. 16, bed knife 200 further includes a pair of apertures 224 are formed through mounting portion 202. This pair of apertures 224 is sized, similar to holes 28, to receive pegs 26 of bed bar 16.

Spring steel bed knife 200 provides a number of advantages over conventional screw-on bed knives and, even, bed knife 100. Specifically, bed knife 200, being made of spring steel, enables it to be made according to a simple cold roll forming technique. This technique, which has not been used before to form magnetic bed knives, dramatically simplifies the manufacturing process, thereby eliminating the need for complex flattening, straightening, forming, grinding, and heat-treating operations.

The description of the invention is merely exemplary in nature and, thus, variations that do not depart from the gist of the invention are intended to be within the scope of the invention. Such variations are not to be regarded as a departure from the spirit and scope of the invention.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims. The description of the invention with reference to the drawings is by way of example only.

The text of the abstract filed herewith is repeated here as part of the specification.

A method of manufacturing a bed knife for a reel mower. The method includes cold roll forming spring steel, flattening and straightening the spring steel, shaping the spring steel through a plurality of rollers to impart a bending force upon the spring steel to define a mounting portion and an upturned portion, and grinding a portion of the upturned portion to form a cutting edge.

## Claims

1. A method of manufacturing a bed knife for a reel mower, said method comprising:
providing a generally planar spring steel member which defines a blank for the bed knife;
shaping said spring steel member through a plurality of rollers to impart a bending force upon said spring steel member to define a mounting portion and an upturned portion of the bed knife; and
grinding a portion of said upturned portion to form a cutting edge of the bed knife.

2. A method according to Claim 1, further comprising:
stamping and/or cutting said spring steel member to a desired length following said shaping of said spring steel member.

3. A method according to Claim 1 or Claim 2, further comprising:
cold roll forming said spring steel member prior to shaping said spring steel.

4. A method according to Claim 3 further comprising:
flattening and straightening said spring steel.
